# EUROPÄISCHE PATENTSCHRIFT

(11) **EP 2 363 623 B1**
(45) Veröffentlichungstag und Bekanntmachung des Hinweises auf die Patenterteilung: **22.08.2012**
(21) Anmeldenummer: 11003131.7
(22) Anmeldetag: 16.12.2008
(51) Int. Cl.: F16K 31/40

(54) **Vorgesteuertes Ventil, insbesondere Proportional-Drosselventil**
Pilot operated valve, in particular proportional choke valve
Soupape précommandée, notamment valve d'étranglement proportionnelle

(30) Priorität: 29.01.2008 DE 102008006380
(43) Veröffentlichungstag der Anmeldung: 07.09.2011
(62) Teilanmeldung aus: 08871974.5
(73) Patentinhaber: Hydac Fluidtechnik GmbH, 66280 Sulzbach/Saar (DE)
(72) Erfinder: Bruck, Peter, 66484 Althornbach (DE); Bill, Markus, 66265 Heusweiler (DE)
(74) Vertreter: Bartels & Partner

(56) Entgegenhaltungen:
- EP-A2- 1 388 672
- CH-A- 395 672
- DE-A1- 4 446 860
- DE-A1- 10 343 608

## Beschreibung

Die Erfindung bezieht sich auf ein vorgesteuertes Ventil, insbesondere vorgesteuertes Proportional-Drosselventil, mit einem Ventilkolben, der in einem Ventilgehäuse mit Fluidein- und -auslass in Längsrichtung verfahrbar geführt und durch an seiner Rückseite wirksamen Fluiddruck mit seiner Vorderseite gegen einen Haupt-Ventilsitz hin vorspannbar ist, mit einer Vorsteuerventileinrichtung, die ein mittels eines elektrisch ansteuerbaren Magnetsystems in der Längsrichtung bewegbares Betätigungsglied aufweist, das mit einem Vorsteuerventilsitz in einer Bohrung des Ventilkolbens zusammenwirkt, die dessen Rückseite mit dem Fluidauslass an der Kolbenvorderseite verbindet, um bei Freigabe des Vorsteuerventilsitzes den Fluiddruck an der Rückseite des Kolbens für eine Öffnungsbewegung abzubauen, wobei zum Aufbau des den Kolben gegen seine Schließstellung vorspannenden Fluiddruckes durch Zufuhr von Vorsteuerfluid eine Strömungsblendeneinrichtung zwischen Kolbenrückseite und dem Fluideinlass des Gehäuses vorhanden ist, und wobei sich die Strömungsblendeneinrichtung in einem Vorsteuerkanal befindet.

Proportional-Drosselventile werden in Fluidsystemen allgemein zur Steuerung von Volumenströmen eingesetzt. Hierbei haben sich direkt gesteuerte Ventile, bei denen, wie bei einem Schalt-Wegeventil, ein Proportional-Magnetsystem direkt auf einen Steuerkolben einwirkt, in solchen Fällen als weniger geeignet erwiesen, wo große Volumenströme, insbesondere bei hohen Differenzdrücken, zu steuern sind, weil gegebenenfalls auftretende Strömungskräfte die Betätigungskräfte des Magnetsystems überlagern und somit zu Fehlfunktionen führen.

Um dem zu begegnen ist es Stand der Technik, für solche Anwendungsfälle Ventile der eingangs angegebenen Gattung zu verwenden, also solche Proportional-Drosselventile, die über eine hydraulische Vorsteuerung verfügen. Wie sich gezeigt hat, treten jedoch auch beim Einsatz derartiger Ventile Probleme hinsichtlich des Betriebsverhaltens auf. Zwar trägt die mechanische Entkoppelung des Ventilkolbens vom Magnetsystem zur Verringerung von Instabilitäten bei, weil der Ventilkolben ausschließlich durch Fluiddruck bewegt ist, die Genauigkeit und Sicherheit der Funktion hängt jedoch maßgeblich vom Zustand der Strömungsblendeneinrichtung des Vorsteuersystem s ab. Bei einem Einsatz in einem Fluidsystem, bei dem das Fluid nicht frei von Schmutzbelastungen ist, würde eine Verstopfung der Blendenbohrung der Blendeneinrichtung zu einem unkontrollierten Öffnen des Ventils führen, was eine Gefährdung der Sicherheit bedeutet. Um dieser Gefahr vorzubeugen, wird die Blendenbohrung üblicherweise relativ groß, mit einem Durchmesser mit mehr als 0,5mm, ausgeführt. Da der Durchmesser des Vorsteuerventilsitzes zur Erfüllung der Ventilfunktion noch größer gewählt werden muss als der Durchmesser der Blendenbohrung, ergeben sich mehrere Probleme. Ein wesentlicher Nachteil ist, dass große Durchmesser von Blendenbohrung und Vorsteuerventilsitz zu einem großen Vorsteuervolumenstrom führen. Bei entsprechend großen Durckdifferenzen kann dieser Volumenstrom mehrere Liter/Min. betragen. Eine Feinsteuerung des Ventiles ist in diesem Volumenstrombereich nicht möglich.

Der am Vorsteuerventilsitz anstehende Differenzdruck erzeugt am mit dem Ventilsitz zusammenwirkenden Ventilkegel des Betätigungsgliedes eine resultierende Kraft, die diesen Ventilkegel in der Schließlage zu halten sucht. Insbesondere bei hohen Differenzdrücken wird somit bereits ein relativ großer Totstrom erforderlich, um das Betätigungsglied vom Vorsteuerventilsitz abzuheben. Nach der Freigabe des Vorsteuerventilsitzes tritt eine schnelle Druckabsenkung auf der Kolbenrückseite ein, wodurch sich auch die auf das Betätigungsglied wirkende Kraft wesentlich verringert. Bei jedoch unverändert großer Magnetkraft entsteht ein Kraftüberschuß des Magnetsystems. Dieser wirkt gegen die Kraft einer das Betätigungsglied üblicherweise gegen den Vorsteuerventilsitz hin vorspannenden Federanordnung, wodurch eine Öffnungsbewegung des Ventilkolbens unerwünscht sprunghaft erfolgt.

Ein Ventil der eingangs beschriebenen Art ist aus DE 103 43 608 A1 bekannt. Das bekannte Ventil ist als magnetbetätigtes Proportional-Drosselventil mit einem Hauptkolben und einem Pilotkolben ausgebildet, wobei der über den Magnetstrom verstellbare Pilotkolben gegen die Kraft einer eingesetzten Feder arbeitet und Schwingungen und Pulsationseinflüsse gedämpft werden. Hierzu ist vorgesehen, dass der Pilotkolben des Vorsteuerventils in einer Steuerbohrung des Hauptkolbens geführt und über einen Kegel die Steuerbohrung sitzdichtend abschließbar ist, wobei durch den Pilotkolben eine Axialbohrung mit anschließender Düse geführt ist, als Verbindung zu einer Dämpfungskammer im unteren Teil der Steuerbohrung, welche durch den Pilotkolben begrenzt wird. Die Dämpfungseinrichtung gebildet durch die Dämpfungskammer nebst der Axialbohrung und der die Druckpulsationen aus dem System dämpfenden Düse lässt die Druckpulsationen zeitlich verzögert auf die Stirnseite des Pilotkolbens wirken. Durch variable Bemessung des Querschnitts der Düse wird die Intensität der Dämpfung des Pilotkolbens eingestellt bzw. variiert.

Im Hinblick auf diese Probleme stellt sich die Erfindung die Aufgabe, ein vorgesteuertes Ventil, insbesondere Proportional-Drosselventil, zur Verfügung zu stellen, das sich bei einfachem Aufbau durch ein besonders gutes und betriebssicheres Betriebsverhalten auszeichnet.

Erfindungsgemäß ist diese Aufgabe durch ein Ventil gelöst, das die Merkmale des Patentanspruchs 1 in seiner Gesamtheit aufweist.

Dadurch, dass entsprechend dem kennzeichnenden Teil des Anspruchs 1 erfindungsgemäß Maßnahmen zur Filtration, vorzugsweise einer Spaltfiltration, des Vorsteuerfluides vorgesehen sind, lassen sich die vorstehend genannten Schwierigkeiten vermeiden. Die Vermeidung der Verschmutzungsgefahr der Blendeneinrichtung eröffnet die Möglichkeit, die Durchmesser von Blendenbohrung und Vorsteuerventilsitz im Vergleich zum Stand der Technik wesentlich kleiner auszuführen. Die dadurch erzielte Verringerung des Vorsteuervolumenstromes ermöglicht eine Feinsteuerung des Ventils auch bei herrschenden hohen Druckdifferenzen und im Bereich kleiner, zu steuernder Fluid-Volumenströme. Zudem begünstigt die Verringerung des Durchmessers des Vorsteuerventilsitzes das stabile Betriebsverhalten beim Abheben des Ventilkegels des Betätigungsgliedes vom Vorsteuerventilsitz, weil sprunghafte Bewegungen beim Öffnungsvorgang vermieden sind, wodurch wiederum die Feinsteuerung begünstigt wird.

Bei einem erfindungsgemäßen Ventil, das sich durch eine besonders einfache Bauweise auszeichnet, erstreckt sich der Vorsteuerkanal mit zur Längsachse radial verlaufender Kanalachse in der Wand des Ventilkolbens von dessen Innenbohrung zu einem im Durchmesser verringerten Umfangsabschnitt des Ventilkolbens, wobei die Einrichtung zur Filtration des Vorsteuerfluides an einem Außenrandbereich des im Durchmesser verringerten Umfangsabschnittes vorgesehen ist.

Bei dieser Bauweise läßt sich ein sich über die gesamte Umfangslänge des Ventilkolbens erstreckender Ringspalt für die Spaltfiltration des Vorsteuerfluides in besonders einfacher Weise dadurch gestalten, dass der Ventilkolben in einem Umfangsbereich, der sich zwischen einem der Vorderseite benachbarten Rand des im Durchmesser verringerten Umfangsabschnittes und einem bei der Schließstellung mit dem Fluideinlaß in Verbindung stehenden Abschnitt erstreckt, einen Außendurchmesser aufweist, der so gewählt ist, dass mit der Wand des Ventilgehäuses der Ringspalt für die Spaltfiltration gebildet ist.

Besondere Vorteile ergeben sich, wenn eine Spaltfiltration des Vorsteuerfluides vorgesehen ist. Bei entsprechender Spaltlänge kann die Spaltbreite, verglichen mit dem Öffnungsquerschnitt der betreffenden Blendenbohrung, derart klein gewählt werden, dass feinste Schmutzpartikel sicher zurückgehalten werden, jedoch aufgrund der Spaltlänge der erforderliche Strömungsquerschnitt für den Durchtritt des Vorsteuerfluides zur Verfügung steht.

Das erfindungsgemäße Ventil kann als stromlos geschlossene Version ausgebildet sein, wobei ein bei Bestromung ziehendes Magnetsystem vorgesehen ist. Hierbei kann die Anordnung so getroffen sein, dass das Betätigungsglied mittels eines Energiespeichers, vorzugsweise einer Federanordnung, für eine bei stromlosem Magnetsystem den Vorsteuerventilsitz sperrende Bewegung vorgespannt und bei Bestromung des Magnetsystems vom Vorsteuerventilsitz zurückziehbar ist. Alternativ kann das Ventil auch als stromlos offene Version (mit einem drückenden Magnetsystem) ausgeführt werden.

In der vorliegenden Beschreibung ist die Erfindung am Beispiel vorgesteuerter Proportional-Drosselventile erläutert, weil die erfindungsgemäß ermöglichte Verringerung der Öffnungsgrößen von Vorsteuer-Blendenbohrung (en) und Vorsteuerventilsitz besonders bei Drosselventilen im Hinblick auf stabiles Steuerverhalten von besonderem Vorteil ist. Die Benutzung einer erfindungsgemäßen Blendeneinrichtung eignet sich jedoch generell auch für vorgesteuerte Ventile anderer Bauart, bei denen eine Reduzierung der Vorsteuerfluidmenge, ohne dabei die Verschmutzungsgefahr zu vergrößern, angestrebt wird. Als Beispiele können hier vorgesteuerte Druckbegrenzungs- sowie Druckregelventile genannt werden.

Nachstehend ist die Erfindung anhand der Zeichnung im Einzelnen erläutert. Es zeigen:
- Fig. 1 einen Längsschnitt eines vorgesteuerten Proportional-Drosselventils in Sitzausführung nach dem Stand der Technik;
- Fig. 2 einen gegenüber Fig. 1 stark vergrößert gezeichneten Ausschnitt des in Fig. 1 mit II bezeichneten Bezirks;
- Fig. 3 einen gegenüber Fig. 1 leicht vergrößert und abgebrochen gezeichneten Längsschnitt eines Ausführungsbeispieles des erfindungsgemäßen Proportional-Drosselventils, wobei in Blickrichtung auf die Fig. gesehen links oben das hydraulische Schaltsymbol für das erfindungsgemäße Ventil wiedergegeben ist;
- Fig. 4 einen gegenüber Fig. 3 stark vergrößerten Ausschnitt des in Fig. 3 mit IV bezeichneten Bezirks.

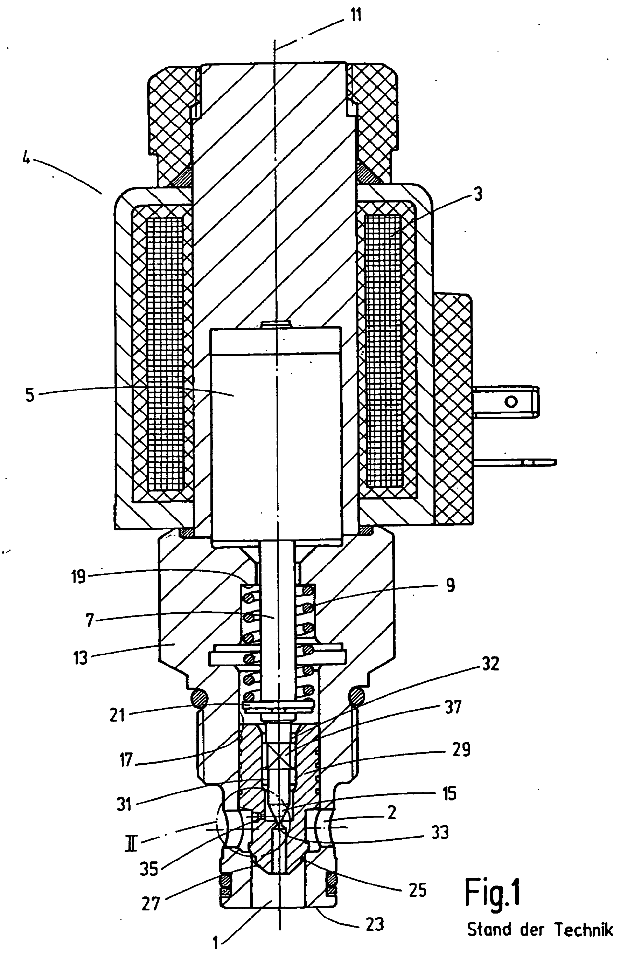

Das bekannte vorgesteuerte Proportional-Drosselventil in Sitzausführung nach der Fig. 1 ist mit einem elektrisch ansteuerbaren Magnetsystem 4 versehen. Derartige Magnetsysteme zum Ansteuern von Ventilen sind im Stand der Technik (DE 44 16 279 A1) hinreichend bekannt, wobei mittels einer Betätigungsspule 3 des Magnetsystems 4 ein Magnetanker 5 ansteuerbar ist. Bei der gezeigten Ausführungsform ist das Magnetsystem 4 als sogenannter ziehender weggesteuerter Proportionalmagnet ausgebildet, der im bestromten Zustand den Magnetanker 5 und damit ein mit diesem verbundenes Betätigungsglied 7 in Blickrichtung auf die Fig. 1 gesehen von unten nach oben bewegt. Im unbestromten Zustand wird der Anker 5 und damit das Betätigungsglied 7 über eine durch eine Druckfeder 9 gebildete Energiespeichereinrichtung nach unten zurückgestellt, d. h. in eine Axialposition bezüglich der Längsachse 11 eingestellt, die dem Schließzustand des Drosselventils entspricht.

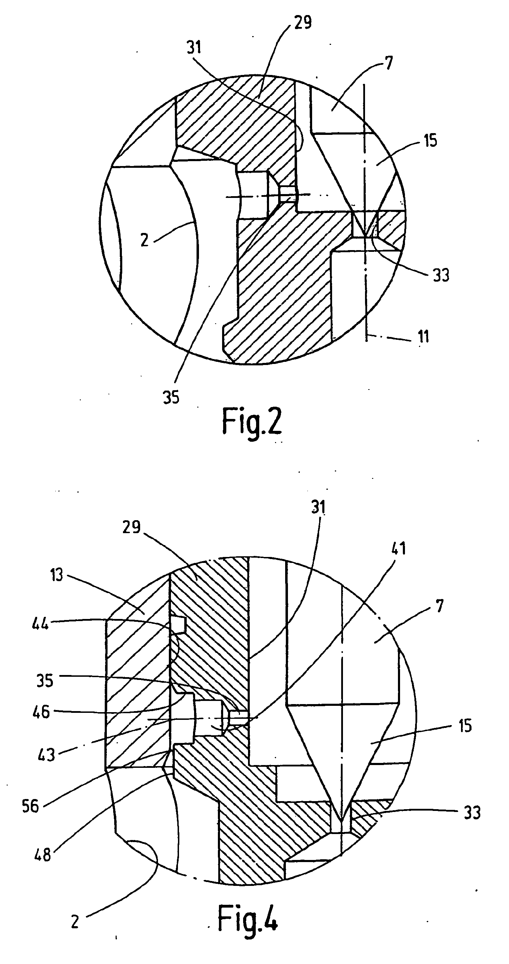

Das Gehäuse des Magnetsystems 4 ist unter Bildung einer Abdichtung mit einem Ventilgehäuse 13 verbunden, in dessen zur Längsachse 11 konzentrischer, durchgehender Bohrung 17 sich das Betätigungsglied 7 hinein erstreckt, dessen spitz zulaufendes Ende einen Vorsteuerventilkegel 15 bildet. Die Bohrung 17 im Ventilgehäuse 13 ist gestuft. Eine dem Magnetsystem 4 benachbarte Stufe 19 bildet die Abstützung für die Feder 9, deren anderes Ende an einem Bund 21 des Betätigungsgliedes 7 abgestützt ist. In der Nähe des Austrittsendes 23 des Ventilgehäuses 13, an dem sich der als Anschluss 1 bezeichnete Fluidaustritt des Ventiles befindet, ist ein Haupt-Ventilsitz 25 ausgebildet, der mit einer Feinsteuerfläche 27 am Ende eines als HauptVentilkörper fungierenden Ventilkolbens 29 zusammen wirkt. Der Ventilkolben 29 ist umfänglich in dem Abschnitt der Gehäusebohrung 17 längs verfahrbar geführt, der sich in der Fig. 1 gesehen nach oben an den Fluideingang anschließt, der als Anschluss 2 bezeichnet ist. Der Ventilkolben 29 seinerseits weist eine zur Längsachse 11 konzentrische Innenbohrung 31 auf, die sich in einem Abstand von dem dem Anschluss 1 zugekehrten Ende zur Bildung eines Vorsteuerventilsitzes 33 verjüngt, der, wie am besten aus Fig. 2 zu ersehen ist, mit dem Vorsteuer-Ventilkegel 15 am Ende des Betätigungsgliedes 7 zusammenwirkt. Wie aus dieser Fig. ebenfalls am deutlichsten zu entnehmen ist, erstreckt sich vom Fluidanschluss 2 ausgehend, eine Blendenbohrung 35 im Ventilkolben 29 in dessen Innenbohrung 31 hinein, wodurch vom Fluidanschluss 2 her ein Fluiddruck an der Kolbenrückseite des Ventilkolbens 29 aufbaubar ist, der den Ventilkolben 29 in Fig. 1 nach unten in die Schließstellung vorspannt, in der seine Steuerfläche 27 am Haupt-Ventilsitz 25 schließend anliegt.

In dem in Fig. 1 oberhalb des Vorsteuerventilsitzes 33 gelegenen Abschnitt bildet die Innenbohrung 31 einen Führungsabschnitt 32, der als Gleitführung für einen Führungskanten aufweisenden Führungskörper 37 des Betätigungsgliedes 7 dient.

Durch Druckaufbau an der Rückseite des Ventilkolbens 29 durch Fluid, das vom Anschluss 2 her über die Blendenbohrung 35 in die Innenbohrung 31 des Ventilkolbens 29 eintritt, ist der Ventilkolben 29 in seiner Schließposition gehalten. Wird das Betätigungsglied 7 durch Bestromen des Magnetsystems 4 zurückgezogen, so dass der Ventilkegel 15 vom Vorsteuerventilsitz 33 abhebt, entsteht an der Kolbenrückseite ein Druckabfall, so dass vom Anschluss 2 her am Ventilkolben 29 wirkender Fluiddruck eine Öffnungsbewegung des Kolbens 29 hervorruft und damit einen Fluidaustritt am Anschluss 1, wobei diesem Fluidstrom der Vorsteuerfluidstrom überlagert ist, der aus der Dimensionierung der Blendenbohrung 35 und des Vorsteuerventilsitzes 33 resultiert.

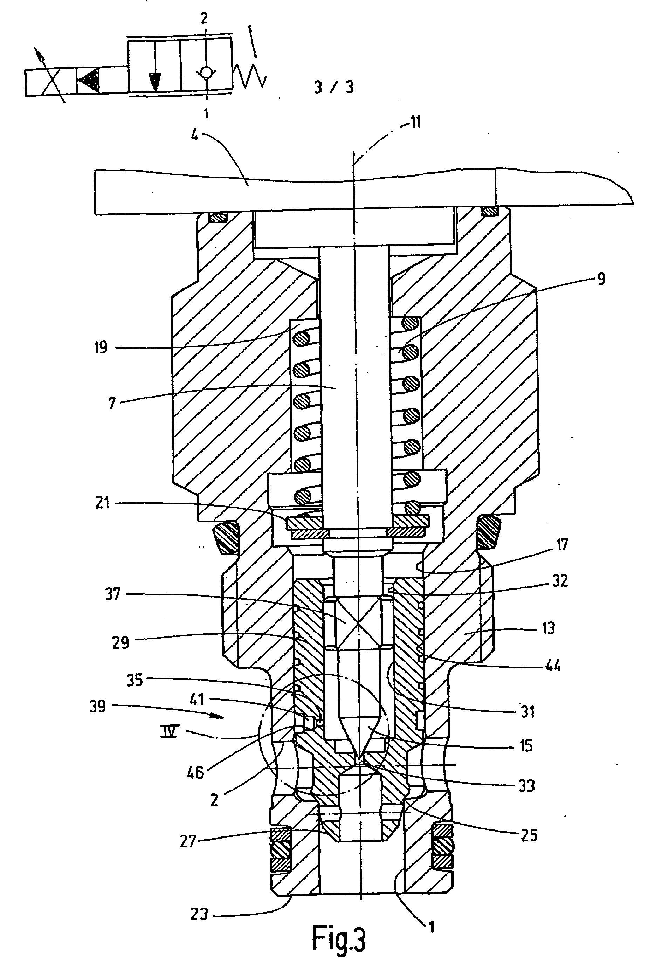

Fig. 3 und 4 verdeutlichen ein Ausführungsbeispiel des erfindungsgemäßen Ventils, bei dem sich der Vorsteuerkanal 41 mit zur Längsachse 11 radial verlaufender Richtung ausschließlich durch die Wand des Ventilkolbens 29 hindurch zur Wand 44 des Ventilgehäuses 13 erstreckt. In dem an die Innenbohrung 31 anschließenden Endbereich bildet der Vorsteuerkanal 41 die Blendenbohrung 35. In.seinem radial äußeren Bereich geht der Vorsteuerkanal 41 in einen im Durchmesser verringerten Umfangsabschnitt 46 des Ventilkolbens 29 über. Zwischen dem mit der Wand 44 des Ventilgehäuses 13 einen Ringraum bildenden Umfangsabschnitt 46 und dem mit dem Fluideinlaß 2 in Verbindung stehenden Umfangsabschnitt 48 (Fig.4) des Ventilkolbens 29 ist dessen Außendurchmesser so gewählt, dass mit der Wand 44 des Ventilgehäuses 13 ein Ringspalt 56 (s. Fig.4) gebildet ist, der die Einrichtung zur Spaltfiltration des Vorsteuerfluides bildet. Entsprechend der Umfangslänge des Ventilkolbens 29 und der sich dadurch ergebenden Länge des Ringspaltes 56 kann dieser so eng gestaltet sein, dass selbst kleinste Schmutzpartikel sicher zurückgehalten werden.

Die erfindungsgemäß vorgesehene Benutzung einer Strömungsblendeneinrichtung 39 in Form einer kombinierten Blenden- und Spaltfiltereinrichtung gewährleistet bei kleinstmöglichen Größen der Blendenöffnung einen störungsfreien Betrieb und ein optimales Betriebsverhalten auch bei hohen Druckdifferenzen und kleinen Fluidvolumenströmen, wobei besonders gute Verhältnisse insbesondere erreicht werden, wenn der Blendenbohrung 35 der Blendeneinrichtung 39 eine zusätzliche zweite Blendenöffnung 57 nachgeschaltet ist.

Das erfindungsgemäße Ventil kann sowohl für mittlere als auch große Volumenströme eingesetzt werden, insbesondere, wenn eine leckagefreie Abdichtung im geschlossenen Zustand erforderlich ist und das Ventil sowohl mit sehr niedrigen Eingangsdrücken an Anschluss 2 (ca. 1 bar) als auch mit hohen Drücken (bis ca. 350 bar) eingesetzt werden soll.

## Patentansprüche

1. Vorgesteuertes Ventil, insbesondere vorgesteuertes Proportional-Drosselventi I,
- mit einem Ventilkolben (29), der in einem Ventilgehäuse (13) mit Fluidein- (2) und -auslass (1) in Längsrichtung verfahrbar geführt und durch an seiner Rückseite wirksamen Fluiddruck mit seiner Vorderseite (27) gegen einen Haupt-Ventilsitz (25) hin vorspannbar ist,
- mit einer Vorsteuerventileinrichtung, die ein mittels eines elektrisch ansteuerbaren Magnetsystems (4) in der Längsrichtung bewegbares Betätigungsglied (7) aufweist, das mit einem Vorsteuerventilsitz (33) in einer Bohrung (31) des Ventilkolbens (29) zusammenwirkt, die dessen Rückseite mit dem Fluidauslass (1) an der Kolbenvorderseite verbindet, um bei Freigabe des Vorsteuerventilsitzes (33) den Fluiddruck an der Rückseite des Kolbens (29) für eine Öffnungsbewegung abzubauen,
- wobei zum Aufbau des den Kolben (29) gegen seine Schließstellung vorspannenden Fluiddruckes durch Zufuhr von Vorsteuerfluid eine Strömungsblendeneinrichtung (39) zwischen Kolbenrückseite und dem Fluideinlass (2) des Gehäuses (13) vorhanden ist, und
- wobei sich die Strömungsblendeneinrichtung (39) in einem Vorsteuerkanal (41) befindet,
- **dadurch gekennzeichnet, dass** sich der Vorsteuerkanal (41) mit zur Längsachse (11) radial verlaufender Kanalachse (43) in der Wand des Ventilkolbens (29) von dessen Innenbohrung (31) zu einem im Durchmesser verringerten Umfangsabschnitt (46) des Ventilkolbens (29) erstreckt,
- dass die Strömungsblendeneinrichtung (39) eine Einrichtung (56) zum Durchführen einer Filtration, vorzugsweise Spaltfitration, des Vorsteuerfluides beinhaltet, und
- dass die Einrichtung (56) zur Filtration des Vorsteuerfluides an einem Außenrandbereich des im Durchmesser verringerten Umfangsabschnittes (46) vorgesehen ist.

2. Ventil nach Anspruch 1, **dadurch gekennzeichnet, dass** der Ventilkolben (29) in einem Umfangsbereich, der sich zwischen einem der Vorderseite (27) benachbarten Rand des im Durchmesser verringerten Umfangsabschnittes (46) und einem bei der Schließstellung mit dem Fluideinlass (2) in Verbindung stehenden Abschnitt (48) erstreckt, einen Außendurchmesser aufweist, der so gewählt ist, dass mit der Wand (44) des Ventilgehäuses (13) ein Ringspalt (56) für die Spaltfiltration des Vorsteuerfluides gebildet ist.

3. Ventil nach einem der vorhergehenden Ansprüche, **dadurch gekennzeichnet, dass** das Betätigungsglied (7) mittels eines Energiespeichers, vorzugsweise einer Federanordnung (9), für eine bei stromlosem Magnetsystem (4) den Vorsteuerventilsitz (33) sperrende Bewegung vorgespannt und bei Bestromung des Magnetsystems (4) vom Vorsteuerventilsitz (33) zurückziehbar ist.

4. Ventil nach einem der vorhergehenden Ansprüche, **dadurch gekennzeichnet, dass** die Bohrung (31) des Ventilkolbens (29) einen von der Kolbenrückseite ausgehenden Führungsabschnitt (32) aufweist, in dem das einen Ventilkegel (15) für die Zusammenwirkung mit dem Vorsteuerventilsitz (33) aufweisende Betätigungsglied (7) geführt ist, und dass der Ventilkölben (29) einen im Durchmesser verringerten Umfangsabschnitt (59) aufweist, in dem sich ein Durchgang für den Eintritt von die Blendeneinrichtung (39) durchströmenden Vorsteuerfluides in den Führungsabschnitt (32) der Bohrung (31) des Ventilkolbens (29) hinein befi ndet.

5. Ventil nach Anspruch 4, **dadurch gekennzeichnet, dass** der im Durchmesser verringerte Umfangsabschnitt (59) des Ventilkolbens (29) hinsichtlich axialer Länge und .axialer Position derart gestaltet ist, dass er bei den im Betrieb möglichen Axialpositionen des Ventilkolbens (29) mit der inneren Kanalmündung des Vorsteuerkanals (41) in Verbindung ist.

## Claims

1. A piloted valve, in particular a piloted proportional throttle valve,
- comprising a valve piston (29) which is guided moveably within a valve housing (13) with a fluid inlet (2) and a fluid outlet (1) in the longitudinal direction, and which can be pressurised by fluid pressure active on its rear side with its front side (27) against a main valve seat (25),
- comprising a pilot valve device which has an actuating member (7) that can be moved in the longitudinal direction by means of an electrically triggerable magnet system (4) and that interacts with a pilot valve seat (33) in a bore (31) of the valve piston (29) which connects its rear side to the fluid outlet (1) on the front side of the piston in order to reduce the fluid pressure on the rear side of the piston (29) for an opening motion when the pilot valve seat (33) is cleared,
- in order to build up the fluid pressure pressurising the piston (29) against its closed position by the supply of pilot fluid a flow baffle device (39) being present between the rear side of the piston and the fluid inlet (2) of the housing (13), and
- the flow baffle device (39) being located in a pilot channel (41),
- **characterised in that** the pilot channel (41) extends with the channel axis (43) running radially to the longitudinal axis (11) in the wall of the valve piston (29) from the inner bore (31) of the latter to a circumferential section (46) of the valve piston (29) with a reduced diameter,
- that the flow baffle device (39) contains a device (56) for carrying out filtration, preferably gap filtration, of the pilot fluid, and
- that the device (56) for filtering the pilot fluid is provided on an outer edge region of the circumferential section (46) with a reduced diameter.

2. The valve according to Claim 1, **characterised in that** the valve piston (29), in a circumferential region which extends between an edge adjacent to the front side (27) of the circumferential section (46) which has a reduced diameter, and a section (48) connected to the fluid inlet (2) in the closed position, has an outer diameter which is chosen such that an annular gap (56) for gap filtration of the pilot fluid is formed with the wall (44) of the valve housing (13).

3. The valve according to any of the preceding claims, **characterised in that** the actuating element (7) is pressurised by means of an energy store, preferably a spring arrangement (9), for movement which blocks the pilot valve seat (33) when the magnet system (4) is de-energised, and can be pulled back from the pilot valve seat (33) when the magnet system (4) is energised.

4. The valve according to any of the preceding claims, **characterised in that** the bore (31) of the valve piston (29) has a guide section (32) passing from the rear side of the piston in which the one valve cone (15) is guided for interaction with the actuating member (7) having the pilot valve seat (33), and that the valve piston (29) has a circumferential section (59) with a reduced diameter in which a passage for the entry of pilot fluid flowing through the baffle device (39) into the guide section (32) of the bore (31) of the valve piston (29) is located.

5. The valve according to Claim 4, **characterised in that** the circumferential section (59) of the valve piston (29) with a reduced diameter is configured as regards axial length and axial position such that it is connected to the inner channel opening of the pilot channel (41) in the axial positions of the valve piston (29) possible during operation.

## Revendications

1. Soupape pilotée, notamment soupape d'étranglement proportionnelle pilotée,
- comprenant un piston (29) de soupape, qui est guidé, en ayant la possibilité de se déplacer dans la direction longitudinale dans une boîte (13) de soupape ayant une entrée (2) et une sortie (1) pour du fluide, et qui peut être précontraint dans la direction d'un siège (25) principal de soupape par son côté (27) avant par une pression de fluide agissant sur sa face arrière,
- comprenant un dispositif de soupape pilote, qui comporte un organe (7) d'actionnement mobile dans la direction longitudinale au moyen d'un système (4) magnétique pouvant être commandé électriquement et coopérant avec un siège (33) de soupape pilote dans un trou (31) du piston (29) de soupape, trou qui en met la face arrière en communication avec la sortie (1) de fluide sur la face avant du piston pour, lorsque le siège (33) de soupape pilote est dégagé, mettre fin, pour un mouvement d'ouverture, à la pression du fluide sur la face arrière du piston (29),
- dans laquelle, pour mettre fin à la pression de fluide mettant le piston (29) sous précontrainte vers sa position de fermeture pour l'apport de fluide pilote, il y a un dispositif (39) formant écran à l'écoulement entre la face arrière du piston et l'entrée (2) pour du fluide de la boîte (13), et
- dans laquelle le dispositif (39) formant écran pour l'écoulement se trouve dans un canal (41) pilote,
- **caractérisée en ce que** le canal (41) pilote s'étend, par son axe (43) s'étendant radialement par rapport à l'axe (11) longitudinal, dans la paroi du piston (29) de soupape de son trou (31) intérieur à une partie (46) périphérique et de diamètre diminué du piston (29) de soupape,
- **en ce que** le dispositif (39) formant écran à l'écoulement comporte un dispositif (56) pour effectuer une filtration, de préférence une filtration par fente, du fluide pilote, et
- **en ce que** le dispositif (56) de filtration du fluide pilote est prévu sur une zone de bord extérieur de la partie (46) périphérique et de diamètre diminué.

2. Soupape suivant la revendication 1, **caractérisée en ce que** le piston (29) de soupape a, dans une zone périphérique qui s'étend entre un bord voisin de la face (27) avant de la partie (46) périphérique et de diamètre diminué et une partie (48) en liaison, en la position de fermeture, avec l'entrée (2) pour du fluide, un diamètre extérieur qui est choisi de manière à former avec la paroi (44) de la boîte (13) de soupape un intervalle (56) annulaire pour la filtration par fente du fluide pilote.

3. Soupape suivant l'une des revendications précédentes, **caractérisée en ce que** l'organe (7) d'actionnement est précontraint au moyen d'un accumulateur d'énergie, de préférence d'un agencement (9) à ressort, pour un mouvement obturant le siège (33) de soupape pilote, lorsque le système (4) magnétique est sans courant et, lorsque le système (4) magnétique est alimenté en courant, peut être retiré du siège (33) de soupape pilote.

4. Soupape suivant l'une des revendications précédentes, **caractérisée en ce que** le trou (31) du piston (29) de soupape comporte une partie (32) de guidage, qui part de la face arrière du piston et dans laquelle est guidé l'organe (7) d'actionnement ayant un cône (15) de soupape destiné à coopérer avec le siège (33) de soupape pilote et **en ce que** le piston (29) de soupape a une partie (59) périphérique et de diamètre diminué, dans laquelle se trouve un passage pour l'entrée de fluide pilote traversant le dispositif (39) formant écran en allant dans la partie (32) de guidage du trou (31) du piston (29) de soupape.

5. Soupape suivant la revendication 4, **caractérisée en ce que** la partie (59) périphérique et de diamètre diminué du piston (29) de soupape est conformée, du point de vue de la longueur axiale et de la position axiale, de manière à être, pour les positions axiales possibles en fonctionnement du piston (29) de vanne, en communication avec l'embouchure intérieure du canal (41) pilote.
